# EUROPEAN PATENT APPLICATION

(11) **EP 3 885 783 A1**
(43) Date of publication of application: **29.09.2021**
(21) Application number: 21162997.7
(22) Date of filing: 16.03.2021
(51) Int. Cl.: G01S 5/02, H04L 29/08

(54) **SCALABLE SYSTEM FOR DEVICE POSITIONING**

(30) Priority: 26.03.2020 EP 20315063
(71) Applicant: ALE International, 92700 Colombes (FR)
(72) Inventor: ELLEOUET, Jerome, 29870 Lannilis (FR); GEREEC, Erwan, 29410 Pleyber-Christ (FR)
(74) Representative: BCF Global

(57) **Abstract**

A Device location system is disclosed. The system (121) comprises a Load Balancer (201), at least two MicroServices (221-224) and a Database (241) shared between the at least two MicroServices (221-224). The Load Balancer (201) receives from a Scanner (111-113) a new measure indicative of a distance between a Device (101-104) and the Scanner (111-113). The new measure is allocated to one of the MicroServices (221-224). The MicroService computes a new position for the Device, and an acccuracy for such new position, and stores them in the Database (241). Thus a load balanced streaming of computed positions and accuracies for a Device are stored in Database (241) by MicroServices (221-224). The storing in Database (241) of both a Device position (or a position estimation) and an accuracy, allows to calculate final Device position after multiple iterations.

## Description

### FIELD

The present technology relates to data processing, more particularly to a scalable system for positioning of devices relative to scanners.

### BACKGROUND

Positioning techniques have been in existence for many years. Traditionally based on technologies such as Time of Flight, Angle of Arrival, Received Signal Strength Indicator (RSSI) or a mix of such techniques, many algorithms are able to reach a good accuracy for positioning. Many such location algorithms are using RSSI to deliver distance estimates usable to calculate positions. Whatever the technology is, there is always a need for a centralized location system that collects information (angles, RSSI, time) from various gateways or scanners to compute the location.

With the advent of location systems being physically located in the cloud, such as solutions made available by the likes of companies such as Mist, or InfSoft, etc..., a need has arisen for a location system that is stateless, with a small footprint, and yet without bringing delays to compute and deliver positions, or introducing additional fault tolerance.

Generally speaking, the present technology aims at providing a scalable location system involving location microservices orchestrated by a load balancer.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art. In particular, such shortcomings of a location system may comprise:
- stateful system making its scaling extremely difficult to achieve;
- large footprint to keep enough measures in memory for calculating positions, creating an issue related to the hosting of the component in the cloud (space and cost);
- system subject to mistakes : time windowing can lead to errors and missing information to calculate a reliable position;
- system sensible to fault: if the component crashes, the context (for example: all RSSI stored values) is also lost and some positions will not be calculated; and/or
- system causing delays in position computing : system needs to wait for having enough measures to be able to calculate a position;

In one embodiment, various implementations of the present technology provide a location system comprising a Load Balancer, at least two MicroServices and a first Database shared between the at least two MicroServices, wherein the Load Balancer is configured to:
- receive from a Scanner a new measure indicative of a distance between a Device and the Scanner; and
- allocate the new measure to one of the at least two MicroServices;
and wherein each of the at least two MicroServices is configured to, if the new measure is allocated to it by the Load Balancer:
- receive the new measure and an identification of the Device and of the Scanner;
- collect from the first Database a position of the Scanner, and query the first Database for a latest position, a latest position timestamp, and a latest position accuracy value V for the Device; and
   - if the first Database has no latest position for the Device, or if the timestamp for the latest position for the Device predates the current time by more than a predetermined value T: calculate a first approximate position for the Device based on the new measure and the position of the Scanner, set a position accuracy V₀ to a minimum accuracy value, and store in the first Database for the Device, the first approximate position as latest position, the current time as latest position timestamp, and the value V₀ as latest position accuracy value V;
   - if the first Database has a latest position for the Device, and the timestamp for the latest position for the Device predates the current time by less than the value T: calculate a second approximate position for the Device based on the new measure and the position of the Scanner, calculate a third approximate position for the Device based on the intersection between the second approximate position and the latest position for the Device, calculate a position accuracy V₁ indicative of an accuracy higher than the value V, and store in the first Database for the Device, the third approximate position as latest position, the current time as latest position timestamp, and the value V₁ as latest position accuracy value V.

In an embodiment, the new measure indicative of the distance between the Device and the Scanner is calculated using one of a received signal strength indicator based algorithm, a time of flight based algorithm, an angle of arrival based algorithm and a combination thereof.

In another embodiment, the value T is predetermined based on an expected speed of motion of the Devices.

In yet another embodiment, the predetermined value T is 300ms +/- 10%.

In yet another embodiment, the values of V are comprised between a minimum value V₀ and a maximum value Vₘₐₓ.

In yet another embodiment, the values V₀ and Vₘₐₓ are predetermined based on an absorption factor, by the environment in which the Devices move, of signals used between the Device and the Scanner to calculate the new measure.

In yet another embodiment, the variation function of discrete values of position accuracies V between V₀ and Vₘₐₓ is substantially one of a linear function, a log function, and an exponential function.

In yet another embodiment, the position of the Scanners is stored in a second Database shared between the at least two MicroServices, and wherein the step of collecting by each of the at least two MicroServices comprises collecting from the second Database a position of the Scanner.

In yet another embodiment, the increments in accuracy values (V₁ - V) are a predetermined function of a measure precision factor of the Scanner from which a new measure is received. In yet another embodiment, the calculated first and second approximate positions for the Device are a circle with a center being the position of the Scanner from which a new measure is received, and of radius R.

In yet another embodiment, the radius R is a predetermined function of a measure precision factor of the Scanner.

In yet another embodiment, each of the at least two MicroServices has associated to it a predetermined value for radius R.

In yet another embodiment, the Load Balancer allocates the new measure to one of the at least two MicroServices using one of a HA proxy, a NGInx, a round robin algorithm, a last connection of the at least two MicroServices, a source IP hash, a weighted response time, and a data streaming engine.

In yet another embodiment, the Load Balancer allocates the new measure to one of the at least two MicroServices based on an identification of the Device.

In yet another embodiment, the Load Balancer, the MicroServices, and the first Database are integrated in a single information handling system.

In yet another embodiment, the Load Balancer, the MicroServices, and the first Database are implemented on a plurality of information handling systems.

In yet another embodiment, the Load Balancer, the MicroServices, and the first Database are implemented in a cloud infrastructure.

In yet another embodiment, the first Database is a timeseries database.

In another embodiment, various implementations of the present technology provide a MicroServices device, comprising:
- an input/output interface adapted for communicating with a Load Balancer and with a Database;
- a processor operatively connected to the input/output interface; and
- a memory device including a non-transitory computer-readable media storing program instructions that, when executed, cause the processor to:
- receive, via the input/output interface from the Load Balancer, a new measure indicative of a distance between a Device and a Scanner, an identification of the Device, and an identification of the Scanner;
- cause the input/output interface to collect, and receive, from the Database a position of the Scanner;
- cause the input/output interface to query, and receive from, the Database a latest position, a latest position timestamp, and a latest position accuracy value V for the Device; and
- if no latest position for the Device is received from the Database, or if the timestamp for the latest position for the Device received from the Database predates the current time by more than a predetermined value T: calculate a first approximate position for the Device based on the new measure and the position of the Scanner, set a position accuracy V₀ to a minimum accuracy value, and cause the input/output interface to store in the Database for the Device, the first approximate position as latest position, the current time as latest position timestamp, and the value V₀ as latest position accuracy value V;
- if a latest position for the Device is received from the Database, and if the timestamp for the latest position for the Device received from the Database predates the current time by less than a predetermined value T: calculate a second approximate position for the Device based on the new measure and the position of the Scanner, calculate a third approximate position for the Device based on the intersection between the second approximate position and the latest position for the Device, calculate a position accuracy V₁ indicative of an accuracy higher than the value V, and cause the input/output interface to store in the Database for the Device, the third approximate position as latest position, the current time as latest position timestamp, and the value V₁ as latest position accuracy value V.

In the context of the present specification, a "database" is any structured collection of data, irrespective of its particular structure, the database management software, or the hardware, whether dedicated or not, on which the data is stored, implemented or otherwise rendered available for use by an IHS.

In the context of the present specification, an "Information Handling System" or "IHS" is intended to include any instrumentality or aggregate of instrumentalities operable to compute, classify, process, transmit, receive, retrieve, originate, switch, store, display, manifest, detect, record, reproduce, handle, or utilize information. For example, an IHS may be without limitation a computer, a smart phone, a server, a processor, or a networking device. An IHS may include a variety of hardware and software components, with a general purpose or configured for a specific user or use. An IHS may include one or more processing resources for executing machine-executable code, such as a central processing unit or other control logic. An IHS may also include, without limitation, one or more machine-readable storage devices for storing machine-executable code or a database, one or more communication ports for communicating with other processing resources, and various input and output devices, such as a keyboard, a mouse, or a display.

In the context of the present specification, a "processor" (or "computing system", or a "computer-based system") is intended to include an IHS that is running software on appropriate hardware operable to perform functions such as information computing, data storage or networking service over a network, and carrying out those requests, or causing those requests to be carried out. The hardware may be dedicated hardware, or generic hardware capable of executing software. When carried out, or caused to be carried out, the functions may be provided by a single dedicated processor, by a single shared processor, or by a plurality of individual processors, some of which may be shared. Moreover, use of the term "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

In the context of the present specification, a "server" is intended to include a processor that is running software on appropriate hardware operable to receive from another IHS (e.g., client devices) requests to perform functions such as information computing, data storage or networking service over a network, and carrying out those requests, or causing those requests to be carried out.

In the context of the present description, unless expressly provided otherwise, the expression "memory" is intended to include Random Access storage systems, available on the market at the time of filing this patent application, and any subsequent equivalent technologies becoming available, regardless of their name, consisting in computing system media for storing digital information. An example of such memory may be a Quad Data Rate (QDR) Static Random Access Memory (SRAM).

In the context of the present description, the expression "microservice" is intended to include an IHS with specialized information handling capabilities, and without keeping any state of previous calculation, that is part of an architecture with at least one other microservice, where such microservices may be relatively small in size, autonomously developed, independently deployable, decentralized and built and released with automated processes found in the likes of one or several load balancers and/or orchestrators for the architecture.

In the context of the present description, the functional steps shown in the figures, may be provided through the use of dedicated hardware, as well as hardware capable of executing software in association with appropriate software.

In the context of the present description, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 depicts an environment in which the method and system according to the present technology may be implemented;
Figure 2 is a detailed view of the system according to the present technology;
Figure 3a-3b depicts method steps implemented in the present technology; and
Figure 4 depicts an exemplary implementation of an IHS that may be used to execute the methods, procedures and status checks according to the present technology.

It should be noted that, unless otherwise explicitly specified herein, the drawings are not to scale. Further, elements that are identical from one figure to the next share the same reference numerals.

### DETAILED DESCRIPTION

Detailed embodiments of the claimed methods and systems are disclosed herein; however, it should be understood that the disclosed embodiments are merely illustrative of the claimed methods and systems that may be embodied in various forms. This technology may, thus, be embodied in many different forms and should not be construed as limited to the exemplary embodiments set forth herein. In the description, details of well-known features and techniques may be omitted to avoid unnecessarily obscuring the presented embodiments.

References in the specification to "one embodiment", "an embodiment", "an example embodiment", etc., indicate that the embodiment described may include a particular feature, structure, or characteristic, but all embodiments may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of the person skilled in the art to affect such feature, structure, or characteristic in connection with other embodiments whether or not explicitly described.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity. In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various procedures which may be substantially represented in computer-readable media and so executed by a computer or processor, whether or not such computer or processor is explicitly shown.

With these fundamentals in place, we will now consider some non-limiting examples to illustrate various implementations of aspects of the present technology.

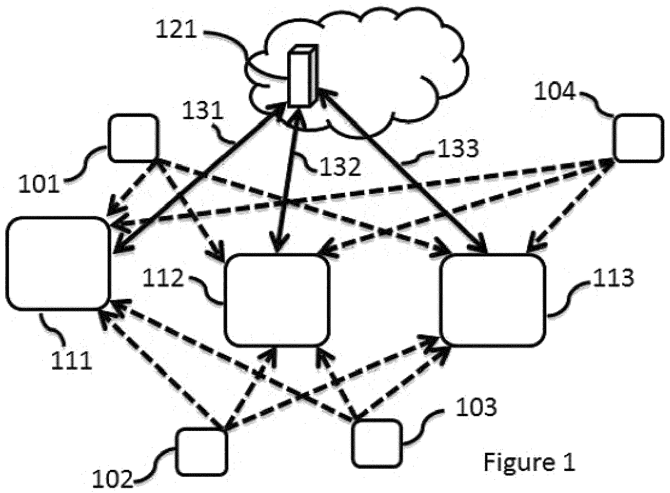

Figure 1 depicts an environment in which the method and system according to the present technology may be implemented. Devices 101-104 each emit a signal which is received (arrows with dotted lines on Figure 1) by Scanners 111-113. Devices 101-104 may for example be and without limitation IoT objects or communication devices equipped with a signal emitting capability (ex: BLE tag or a WIFI client). Signal used may for example be without limitation a USB, a Bluetooth or a Wifi signal. Scanners 111-113 may for example and without limitation be Access Points, Bluetooth Gateway, deskphones with embedded Bluetooth chipsets, a USB dongle that may be plugged on a communication device (phone, access point, PC...) or a standalone beacon. The number of Devices or Scanners represented is merely for illustration purposes, and any number from 2 up may be implemented still within the teachings of the present description. Scanners 111-113 may each communicate with a Location Engine 121 through respectively links 131-133. Location Engine 121 may be implemented in the cloud, within a cloud infrastructure.

Location Engine 121 has the capability to calculate the physical position of Devices 101-104. This may be achieved for example and without limitation, through the use of RSSI-based algorithms. As is known to the person skilled in the art, such algorithms involve first measuring the signal strength received by each one of Scanners 111-113 from one of Devices 101-104 to track and estimate a distance between the two, using for example a path loss formula, and second a calculation of estimated position regarding one of Scanners 111-113, and correlation with the others of Scanners 111-113. Algorithms such as for example trilateration or virtual fingerprinting map may be used. The focus in the present description on RSSI-based algorithms and the trilateration algorithm is merely for illustration purposes, and the teachings herein apply equally to other than RSSI-based or trilateration algorithms. The present technology is equally applicable to other sources of distance estimations including, for example and without limitation, techniques based on Time of Flight or on Angle of Arrival. In an embodiment, a plurality of these techniques may be combined.

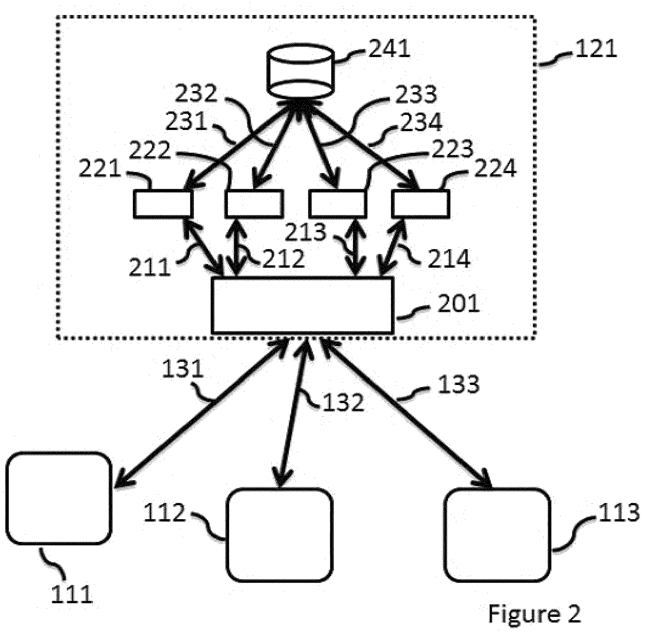

Figure 2 is a detailed view of the system according to the present technology corresponding to the depiction of Figure 1. Scanners 111-113 may each communicate with Location Engine 121 through respectively links 131-133. Scanners 111-113 act as publishers of RSSI measures for Devices 101-104 transmitted to a Load Balancer 201. RSSI measures received by Load Balancer 201 through links 131-133, are load balanced to MicroServices 221-224, of which four are represented for illustration purposes only, through respectively links 211-214. According to the present technology, there could be any number of MicroServices 221-224, including large numbers (above 10k). As will be appreciated by the person skilled in the art, Load Balancer 201 may be of a various types, such as, without limitation, HA proxy, NGInx, or be based on round robin, last connection, source IP hash, weighted response time, etc. A data streaming engine (such as for example Apache Kafka, Storm or Spark) may also be used, coming with publishing and load balancing capabilities and ensuring fault-tolerance and multi-tasking by using partition replication of topics that may be handled by MicroServices 221-224.

The pool of MicroServices 221-224 is in charge to calculate positions of Devices 101-104 with parallel tasking. Each of MicroServices 221-224 may compute position based on an incoming RSSI measure and any existing recent enough computed position as explained below. MicroServices 221-224 may access a shared Database 241 through respectively links 231-234, so as to, for example, store newly computed positions for Devices 101-104, and access information about the site in which the present system is deployed, including the geographical position of Scanners 111-113, or about previously computed positions for Devices 101-104. It will be apparent to the person skilled in the art that information about the site in which the present system is deployed and the geographical position of Scanners 111-113 may be acquired and stored in Database 241 through known techniques that are outside of the scope of the present technology. Database 241 may be a timeseries database for faster read & write based on timestamps.

The pool of MicroServices 221-224 may be controlled by an orchestrator, such as, without limitation, Kubernetes, in order to manage horizontal scaling (monitoring of services, instantiation of new services, restart of services, etc....) and synchronize MicroServices 221-224. Load Balancer 201, MicroServices 221-224 and Database 241 may for example be implemented in one single server, or several physically distinct servers.

In operation, a first RSSI value corresponding to, for example, Device 101, along with an identification for Device 101, is received from, for example, Scanner 111, and fed through link 131 into Load Balancer 201, then load balanced to an instance such as MicroService 221. MicroService 221 may obtain the position (such as for example, under the form of latitude and longitude) of Scanner 111 from Database 241 through link 231. MicroService 221 may translate this first RSSI value into a radius R1 around Scanner 111 in case of trilateration with path loss algorithm. The value of R1 may be pushed to Database 241, along with a timestamp T1, and an accuracy value of 1 (because only 1 input is used so far to calculate the position). Database 241 may thus contain a table such as:

**Database 241 table**

| **Line** | **Device identification** | **Timestamp** | **Scanner Id** | **Radius of position for Device** | **Position accuracy** |
|---|---|---|---|---|---|
| 1 | Device 101 Id | T1 | Scanner 111 | R1 (/ position Scanner 111) | 1 |

Hypothetically, a few ms later (at T2), a second RSSI value corresponding to Device 101, along with an identification for Device 101, is received from, for example, Scanner 112, and fed through link 132 into Load Balancer 201, then load balanced to an instance such as MicroService 224. MicroService 224 may check if a previous position has been calculated for Device 101 in a recent timeframe. "Recent" as will be appreciated by the person skilled in the art, may be more recent than a predetermined value T, for example be 300ms. The predetermined value T may be adjusted depending upon the environment in which the present technology is deployed. For example, in an environment where Devices move faster, the predetermined value T may be reduced. This check by MicroService 224 may be performed by querying Database 241 and obtaining the information in line 1 of the table above. MicroService 224 may then translate this second RSSI value into a radius R2 around Scanner 112. The value of R1 ∩ R2 may be pushed to Database 241, along with a timestamp T2, and an accuracy value of 2 (because of 2 inputs used so far to calculate the position). Database 241 may thus contain a new line in the table such as:

**Database 241 table**

| | | | | | |
|---|---|---|---|---|---|
| 2 | Device 101 Id | T2 | Scanner 112 | R1 (/position Scanner 111) ∩ R2 (/position Scanner 112) | 2 |

If a previous position has been calculated for Device 101, but not in a recent timeframe, the second RSSI value received may be handled as if it were a first RSSI value received for Device 101.

Hypothetically, a few ms later yet (at T3), a third RSSI value corresponding to Device 101, along with an identification for Device 101, is received from, for example, Scanner 113, and fed through link 133 into Load Balancer 201, then load balanced to an instance such as MicroService 223. MicroService 223 may check if a previous position has been calculated for Device 101 in a recent timeframe. This check by MicroService 223 may be performed by querying Database 241 and obtaining the information in the table above. MicroService 223 may then translate this third RSSI value into a radius R3 around Scanner 113. The value of R1 ∩ R2 ∩ R3 may be pushed to Database 241, along with a timestamp T3, and an accuracy value of 3 (because of 3 inputs used so far to calculate the position). Database 241 may thus contain a new line in the table such as:

**Database 241 table**

| | | | | | |
|---|---|---|---|---|---|
| 3 | Device 101 Id | T3 | Scanner 113 | R1 (/position Scanner 111) ∩ R2 (/position Scanner 112) ∩ R3 (/position Scanner 113) | 3 |

There again, if a previous position has been calculated for Device 101, but not in a recent timeframe, the third RSSI value received may be handled as if it were a first RSSI value received for Device 101.
It will be appreciated by the person skilled in the art that intersects of radiuses R1, R2 and/or R3 may be expressed in a GeoJson format. Further, the size of radiuses may be configured and/or adapted depending on the overall precision required of the system. In one aspect of the present technology, not all MicroServices 221-224 use the same radius.

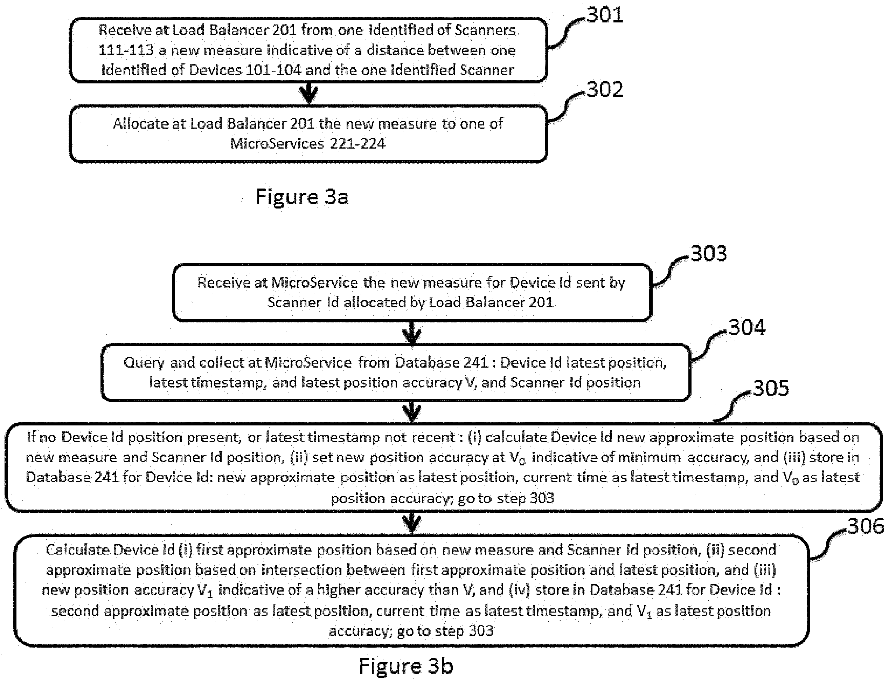

Figure 3a-3b depict method steps implemented in the present technology. Figure 3a depicts method steps implemented in Load Balancer 201. At step 301, a new measure indicative of a distance between one identified of Devices 101-104 and one identified of Scanners 111-113, is received by Load Balancer 201 from the one identified of the Scanners 111-113. At step 302, Load Balancer 201 allocates the received new measure to one of the MicroServices 221-224. In one aspect of the technology, instead of allocating the received new measure using one or several of the already mentioned load balancing techniques (round robin, etc.), Load Balancer 201 allocates to each of the MicroServices 221-224 new measures as they relate specifically to the position of one or several particular ones of the Devices 101-104.

Figure 3b depicts method steps implemented in each of MicroServices 221-224. Assuming a new measure for one identified of Devices 101-104 is allocated to a given MicroService by Load Balancer 201, such new measure is received at step 303, along with the identification of the one of Devices 101-104 and of the one of Scanners 111-113 that sent the new measure. At step 304 the MicroService queries and collects from the Database 241 the latest position, timestamp and position accuracy V for the one identified of Devices 101-104, as well as the position for the one identified of the Scanners 111-113. In case either there is no position information in the Database 241 for the one identified Device, or such information is obsolete (timestamp is not recent, i.e. it predates the current time by more than a predetermined value T), then at step 305: a new approximate position is calculated for the one identified Device based on the received new measure, and the position of the one identified Scanner, and a new position accuracy is set at a minimum accuracy value V₀ for the location system, for example being set to "1"; the new approximate position, the current time, and the new position accuracy for the one identified Device are stored in Database 241, as respectively the latest position, timestamp and position accuracy for the one identified Device. Then the MicroService awaits (step 303) the next measure allocated to it by Load Balancer 201. In the context of this description, expressions such as "minimum accuracy value" and "higher position accuracy" reflect the functional use of these terms. A higher (or lower) position accuracy is not necessarily implemented using a higher (or lower) numerical value.

Otherwise (there is a position information in the Database 241 for the one identified Device, and such information is not obsolete), then at step 306: a first approximate position is calculated for the one identified Device based on the received new measure, and the position of the one identified Scanner, a second approximate position is calculated for the one identified Device based on the intersection between the first approximate position and the latest position, as well as a new position accuracy V₁ higher than the latest position accuracy V; the second approximate position, the current time, and the new position accuracy for the one identified Device are stored in Database 241, as respectively the latest position, timestamp and position accuracy for the one identified Device. Then the MicroService awaits (step 303) the next measure allocated to it by Load Balancer 201. Thus a streaming of computed positions and accuracies for a Device are stored in Database 241. The storing in Database 241 of both a Device position (or a position estimation) and an accuracy, allows to calculate final Device position after multiple iterations.

It will be apparent to the person skilled in the art that equivalent techniques for keeping track of position accuracy, other than those illustrative ones described herein, may be had still within the scope of the present teachings, and other values may be had to represent both the minimum position accuracy (first received position) and the subsequent position accuracies. For example, and without limitation:
- the value of the position accuracy may be a linear or a log function of the number of new measures received for a given Device, between a minimum position accuracy (first received measure) and a maximum position accuracy (after a predetermined number of subsequently received measures);
- the increment of position accuracy after each received measure for a given Device may depend on which Scanner has sent the measure, to account for differences in inherent or relative measure precisions of the various Scanners; and/or
- the value the minimum position accuracy (first received measure) and/or the variation function of the position accuracy depending on the number of new measures received for a given Device, may be predetermined based on the environment in which Devices move: for example, in an environment where measures and their accuracy are expected to be more affected (e.g. thick walls), a lower minimum position accuracy (first received measure) may be adopted, and/or a flatter variation function of the position accuracy depending on the number of new measures received (i.e. a new measure adds relatively less accuracy), and/or an exponential variation function of this position accuracy (i.e. early new measures add relatively less accuracy than later new measures).

It will be equally apparent to the person skilled in the art that measures sent by Scanners 111-113 to Load Balancer 201 may be of various nature. For example and without limitation, Scanners (111-113) may be sending measures indicative of a distance between a Device and the Scanner based the strength of the signal received by the Scanner from the Device (RSSI), or based on the Time Difference of Arrival (TDoA), or on the Angle of Arrival (AoA), etc.

It will be equally apparent to the person skilled in the art yet that information about the site in which the present system is deployed and the geographical position of Scanners 111-113 may be acquired and stored in a second database, also shared between MicroServices, distinct from Database 241, without affecting the generality of the teachings herein.

Generally speaking, a Load Balancer 201, MicroServices 221-224 and a Database 241 may be implemented for the present technology. The person skilled in the art will appreciate both that the representations in Figures 1 and 2 are a logical representation without reference to a particularly necessary corresponding hardware implementation, and that other equivalent logical implementations may be had without departing from the scope of the present technology. In particular, the Load Balancer 201, and/or one or several of the MicroServices 221-224, and/or the Database 241 may be integrated in a single IHS, or several physically distinct IHS.

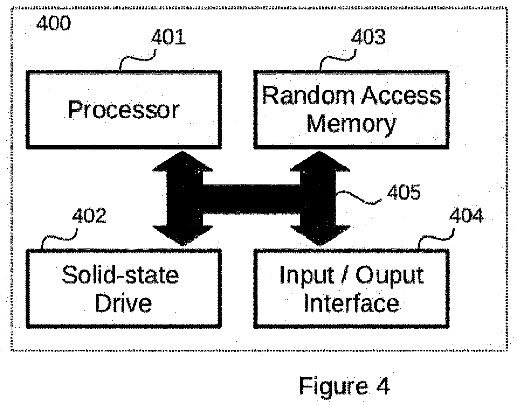

Figure 4 depicts an exemplary implementation of an IHS that may be used to execute the procedures, status checks and methods according to the present technology. As will be appreciated by the person skilled in the art, such IHS may be implemented in any other suitable hardware, software, and/or firmware, or a combination thereof, and may be a single physical entity, or several separate physical entities with a distributed functionality.

The IHS may be an IHS 400 comprising various hardware components including one or more single or multi-core processors collectively represented by a processor 401, a memory device comprising solid-state drive 402, and/or a random access memory 403 and an input/output interface 404. In some embodiments, the IHS 400 may also be a sub-system of one of the above-listed systems. In some other embodiments, the IHS 400 may be an "off the shelf' generic computer system. In some embodiments, the IHS 400 may also be distributed amongst multiple systems. The IHS 400 may also be specifically dedicated to the implementation of the present technology. As a person in the art of the present technology may appreciate, multiple variations as to how the IHS 400 is implemented may be envisioned without departing from the scope of the present technology.

Communication between the various components of the IHS 400 may be enabled by one or more internal and/or external buses 405 (e.g. a PCI bus, universal serial bus, IEEE 1394 "Firewire" bus, SCSI bus, Serial-ATA bus, ARINC bus, etc.), to which the various hardware components are electronically coupled.

The input/output interface 404 may allow enabling networking capabilities such as wire or wireless access. As an example, the input/output interface 404 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 402 may include a non-transitory computer-readable media that stores program instructions, such as those part of, for example, a library, an application, etc. suitable for being loaded into the random access memory 403 and executed by the processor 401 for the procedures and status checks according to the present technology.

The system of the present technology has an extremely light footprint as well as an ability to deliver real time locations. The described architecture controls multiple location MicroServices to achieve load balancing among multiple instances, and parallel computing in the context of positioning. The present technology allows to:
- calculate position using streaming of data;
- scale the system by deploying as the case may be a very high number of MicroServices; their number may for example be adapted depending on the number of Devices deployed and/or the number of Scanners deployed and/or the density of such Scanners in an area to be monitored, while still keeping memory usage under control for storing positions; and/or
- ensure resiliency: no position is lost if a MicroService crashes, except possibly only the last iteration of the position calculation; even that case may be managed by for example the use of is lost but could be managed by another location instance thanks to the use of for example Apache Kafka fault management, with Zookeeper detecting the failure of a Kafka consumer and restarting the operation.

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A location system comprising a Load Balancer (201), at least two MicroServices (221-224) and a first Database (241) shared between the at least two MicroServices (221-224), wherein the Load Balancer (201) is configured to:
- receive (301) from a Scanner (111-113) a new measure indicative of a distance between a Device (101-104) and the Scanner (111-113) ; and
- allocate (302) the new measure to one of the at least two MicroServices (221-224); and wherein each of the at least two MicroServices (221-224) is configured to, if the new measure is allocated to it by the Load Balancer (201):
- receive (303) the new measure and an identification of the Device (101-104) and of the Scanner (111-113);
- collect from the first Database (241) a position of the Scanner (111-113), and query the first Database (241) for a latest position, a latest position timestamp, and a latest position accuracy value V for the Device (101-104); and
- if the first Database (241) has no latest position for the Device (101-104), or if the timestamp for the latest position for the Device (101-104) predates the current time by more than a predetermined value T: calculate a first approximate position for the Device (101-104) based on the new measure and the position of the Scanner (111-113), set a position accuracy V₀ to a minimum accuracy value, and store in the first Database (241) for the Device (101-104), the first approximate position as latest position, the current time as latest position timestamp, and the value V₀ as latest position accuracy value V;
- if the first Database (241) has a latest position for the Device (101-104), and the timestamp for the latest position for the Device (101-104) predates the current time by less than the value T: calculate a second approximate position for the Device (101-104) based on the new measure and the position of the Scanner (111-113), calculate a third approximate position for the Device (101-104) based on the intersection between the second approximate position and the latest position for the Device (101-104), calculate a position accuracy V₁ indicative of an accuracy higher than the value V, and store in the first Database (241) for the Device (101-104), the third approximate position as latest position, the current time as latest position timestamp, and the value V₁ as latest position accuracy value V.

2. The system of claim 1, wherein the new measure indicative of the distance between the Device (101-104) and the Scanner (111-113) is calculated using one of a received signal strength indicator based algorithm, a time of flight based algorithm, an angle of arrival based algorithm and a combination thereof.

3. The system of claim 1 or 2 in which the value T is predetermined based on an expected speed of motion of the Devices (101-104).

4. The system of any of the claims 1 to 3 in which the predetermined value T is 300ms +/-10%.

5. The system of any of the claims 1 to 4 in which the values of V are comprised between a minimum value V₀ and a maximum value Vₘₐₓ.

6. The system of any of the claims 2 to 5 in which the values V₀ and Vₘₐₓ are predetermined based on an absorption factor, by the environment in which the Devices (101-104) move, of signals used between the Device (101-104) and the Scanner (111-113) to calculate the new measure.

7. The system of claim 5 in which the variation function of discrete values of position accuracies V between V₀ and Vₘₐₓ is substantially one of a linear function, a log function, and an exponential function.

8. The system of any of the claims 1 to 7 in which the position of the Scanners (111-113) is stored in a second Database shared between the at least two MicroServices (221-224), and wherein the step of collecting by each of the at least two MicroServices (221-224) comprises collecting from the second Database a position of the Scanner (111-113).

9. The system of any of the claims 1 to 8 in which the increments in accuracy values (Vi - V) are a predetermined function of a measure precision factor of the Scanner (111-113) from which a new measure is received.

10. The system of any of the claims 1 to 9 in which the calculated first and second approximate positions for the Device (101-104) are a circle with a center being the position of the Scanner (111-113) from which a new measure is received, and of radius R.

11. The system of claim 10 in which the radius R is a predetermined function of a measure precision factor of the Scanner (111-113).

12. The system of claim 10 in which each of the at least two MicroServices (221-224) has associated to it a predetermined value for radius R.

13. The system of any of the claims 1 to 12 in which the Load Balancer (201) allocates (302) the new measure to one of the at least two MicroServices (221-224) using one of a HA proxy, a NGInx, a round robin algorithm, a last connection of the at least two MicroServices (221-224), a source IP hash, a weighted response time, and a data streaming engine.

14. The system of any of the claims 1 to 12 in which the Load Balancer (201) allocates (302) the new measure to one of the at least two MicroServices (221-224) based on an identification of the Device (101-104).

15. The system of any of the claims 1 to 14, wherein the Load Balancer (201), the MicroServices (221-224), and the first Database (241) are integrated in a single information handling system.

16. The system of any of the claims 1 to 14, wherein the Load Balancer (201), the MicroServices (221-224), and the first Database (241) are implemented on a plurality of information handling systems.

17. The system of any of the claims 1 to 16, wherein the Load Balancer (201), the MicroServices (221-224), and the first Database (241) are implemented in a cloud infrastructure.

18. The system of any of the claims 1 to 17 in which the first Database (241) is a timeseries database.

19. A MicroServices device (221-224), comprising:
- an input/output interface (404) adapted for communicating with a Load Balancer (201) and with a Database (241);
- a processor (401) operatively connected to the input/output interface (404); and
- a memory device including a non-transitory computer-readable media (402) storing program instructions that, when executed, cause the processor (401) to:
- receive (303), via the input/output interface (404) from the Load Balancer (201), a new measure indicative of a distance between a Device (101-104) and a Scanner (111-113), an identification of the Device (101-104), and an identification of the Scanner (111-113);
- cause the input/output interface (404) to collect, and receive, from the Database (241) a position of the Scanner (111-113);
- cause the input/output interface (404) to query, and receive from, the Database (241) a latest position, a latest position timestamp, and a latest position accuracy value V for the Device (101-104); and
- if no latest position for the Device (101-104) is received from the Database (241), or if the timestamp for the latest position for the Device (101-104) received from the Database (241) predates the current time by more than a predetermined value T: calculate a first approximate position for the Device (101-104) based on the new measure and the position of the Scanner (111-113), set a position accuracy V₀ to a minimum accuracy value, and cause the input/output interface (404) to store in the Database (241) for the Device (101-104), the first approximate position as latest position, the current time as latest position timestamp, and the value V₀ as latest position accuracy value V;
- if a latest position for the Device (101-104) is received from the Database (241), and if the timestamp for the latest position for the Device (101-104) received from the Database (241) predates the current time by less than a predetermined value T: calculate a second approximate position for the Device (101-104) based on the new measure and the position of the Scanner (111-113), calculate a third approximate position for the Device (101-104) based on the intersection between the second approximate position and the latest position for the Device (101-104), calculate a position accuracy V₁ indicative of an accuracy higher than the value V, and cause the input/output interface (404) to store in the Database (241) for the Device (101-104), the third approximate position as latest position, the current time as latest position timestamp, and the value V₁ as latest position accuracy value V.
